(19) Europäisches Patentamt / European Patent Office / Office européen des brevets

(11) **EP 4 365 433 A1**

(12) **EUROPEAN PATENT APPLICATION**
published in accordance with Art. 153(4) EPC

(43) Date of publication:
**08.05.2024 Bulletin 2024/19**

(21) Application number: **22931239.2**

(22) Date of filing: **08.09.2022**

(51) International Patent Classification (IPC):
**F02F 5/00** (2006.01)    **F02B 43/10** (2006.01)

(86) International application number:
**PCT/JP2022/033776**

(87) International publication number:
**WO 2024/053065 (14.03.2024 Gazette 2024/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TPR Co., Ltd.**
**Tokyo 100-0005 (JP)**

(72) Inventors:
• **NAGAKURA, Hiroyuki**
  **Tokyo 100-0005 (JP)**
• **OOURA, Shinsuke**
  **Tokyo 100-0005 (JP)**
• **AOKI, Takashi**
  **Tokyo 100-0005 (JP)**
• **YONEYAMA, Osamu**
  **Tokyo 100-0005 (JP)**
• **KAWAI, Kiyoyuki**
  **Tokyo 100-0005 (JP)**

(74) Representative: **Novagraaf International SA**
**Chemin de l'Echo 3**
**1213 Onex, Geneva (CH)**

(54) **COMPRESSION RING**

(57)    A compression ring to be used in a spark-ignition engine using hydrogen gas fuel and to be fitted to a piston ring groove of a piston installed in a cylinder, wherein T ≤ 10 is satisfied, when an abrasion resistance test is performed with a reciprocating friction tester in a predetermined condition in order to evaluate an outer peripheral sliding surface of the compression ring, $TW1$ ($\mu$m) is defined as an amount of abrasion of the outer peripheral sliding surface in the test with dropping of 1 mL/hour of a bearing oil and 0.5 mL/hour of distilled water, $TO1$ ($\mu$m) is defined as an amount of abrasion of the outer peripheral sliding surface in the test with dropping of only 1 mL/hour of the bearing oil, and T ($\mu$m) = $TW1$ - $TO1$ is defined.

Fig. 1

**Description**

TECHNICAL FIELD

The present invention relates to a compression ring to be used in a spark-ignition engine using hydrogen gas fuel.

BACKGROUND ART

In recent years, reductions in $CO_2$ emission and amount of use of fossil fuel have been demanded, and there have been studied techniques relating to internal-combustion engines using, as fuel, hydrogen gas or mixed fuel of hydrogen gas and other fuel (hereinafter, both will be also collectively referred to as "hydrogen gas fuel"), from the viewpoint of environmental load.

In this regard, for example, Patent Document 1 discloses, as a member used for hydrogen engines, a member where a covering layer of stainless steel as a material is provided in order to suppress hydrogen brittle fracture.

Patent Document 2 discloses a member for hydrogen engines, wherein the member is subjected to physical and chemical treatments in order to prevent the member from rusting due to water vapor generated by combustion of hydrogen gas.

Patent Document 3 shows that cooling of a cylinder in consideration of condensation of water vapor is not performed in a common hydrogen engine, and discloses a hydrogen engine for control of water vapor condensation in a cylinder constituting a combustion chamber.

RELATED ART DOCUMENTS

PATENT DOCUMENTS

   [Patent Document 1] Japanese Unexamined Utility Model Application Publication No. S51-137004
   [Patent Document 2] Japanese Unexamined Patent Application Publication No. S51-081203
   [Patent Document 3] Japanese Unexamined Patent Application Publication No. 2003-013765

SUMMARY OF THE INVENTION

PROBLEMS TO BE SOLVED BY THE INVENTION

A spark-ignition engine using hydrogen gas fuel generates no latent heat of vaporization or a small amount of latent heat of vaporization unlike the case of use of gasoline fuel, and thus the temperature of each component such as a piston ring, a cylinder bore, and a piston is increased. The present inventors have found that the surface temperatures of such components are also consequently increased to thereby increase also the temperature of a lubricant oil interposed in a sliding portion and easily cut an oil film, thereby increasing the amount of abrasion of the piston ring and in particular affecting abrasion of the outer periphery of a compression ring located near a combustion chamber, as well as use of hydrogen gas fuel leads to generation of a large amount of water during combustion and such water and the lubricant oil are mixed to thereby sometimes deteriorate the environment of sliding between the piston ring and the cylinder bore.

The present inventors have then found that the outer periphery of the compression ring is abraded to cause early losses in outer peripheral shapes of a barrel, a taper, and the like, thereby sometimes leading to significant deterioration in seal performance of the cylinder bore and the outer periphery, as one of main roles of the compression ring, and a reduction in tension of the compression ring also leads to deterioration in seal performance.

The present invention has been made in view of such circumstances, and an object thereof is to provide a compression ring that can retain its outer peripheral shape and keep seal performance even under an unfavorable environment for abrasion of the outer periphery of the compression ring, namely, high temperature and water excess unlike use of gasoline fuel, in a spark-ignition engine using hydrogen gas fuel.

MEANS FOR SOLVING THE PROBLEMS

The present inventors have carried out studies in order to solve the above problems, and thus have found that the above problems can be solved by a compression ring to be fitted to a piston ring groove of a piston, in which the amount of abrasion in an abrasion resistance test satisfies a predetermined condition, and then have completed the present invention.

The present invention relates to a compression ring to be used in a spark-ignition engine using hydrogen gas fuel, preferably in an automobile engine, and to be fitted to a piston ring groove of a piston installed in a cylinder, wherein T ≤ 10 is satisfied, when

an abrasion resistance test is performed with a reciprocating friction tester in a predetermined condition in order to evaluate an outer peripheral sliding surface of the compression ring, TW1 ($\mu$m) is defined as an amount of abrasion of the outer peripheral sliding surface in the test with dropping of 1 mL/hour of a bearing oil and 0.5 mL/hour of distilled water,
TO1 ($\mu$m) is defined as an amount of abrasion of the outer peripheral sliding surface in the test with dropping of only 1 mL/hour of the bearing oil, and
T ($\mu$m) = TW1 - TO1 is defined.

M ≤ 0.09 is preferably satisfied, when

Ft (N) is defined as a tension of the compression ring, S13 (mm) is defined as a length in an axis direction of the outer peripheral sliding surface of the compression ring, and
in a case where the piston is disposed so that the outer periphery of the compression ring abuts with a cylinder bore, D (mm) is defined as an inner diameter of the cylinder bore, a11 (mm) is defined as a distance in a radius direction between an upper connection point of the compression ring and an inner wall of the cylinder bore, a12 (mm) is defined as a distance in a radius direction between a lower connection point of the compression ring and the inner wall of the cylinder bore, and
Fd = Ft/D,
head h = (a11 + a12)/2,
outer periphery inclination OSt = h/(S13/2), and
abrasion index M = T × Fd × Ost
are defined.

A/T ≥ 100 is preferably satisfied, when
A(HV0.1) is defined as a surface Vickers hardness of the outer peripheral sliding surface.

EFFECTS OF THE INVENTION

According to the present invention, a compression ring that can keep seal performance even under an environment of high temperature and water excess, in a spark-ignition engine using hydrogen gas fuel, can be provided.

BRIEF DESCRIPTION OF THE DRAWINGS

FIG. 1 is a cross-sectional schematic view of a piston in which the compression ring of the present embodiment is installed.
FIG. 2 is a schematic view perpendicular to a perimeter direction of the compression ring of the present embodiment.
FIG. 3 is a schematic view illustrating a configuration of a reciprocating friction tester.
FIG. 4 is an illustration diagram of a profile line of the outer periphery of the compression ring, and an upper connection point and a lower connection point, obtained with a stylus type surface roughness measurement device.

DESCRIPTION OF EMBODIMENTS

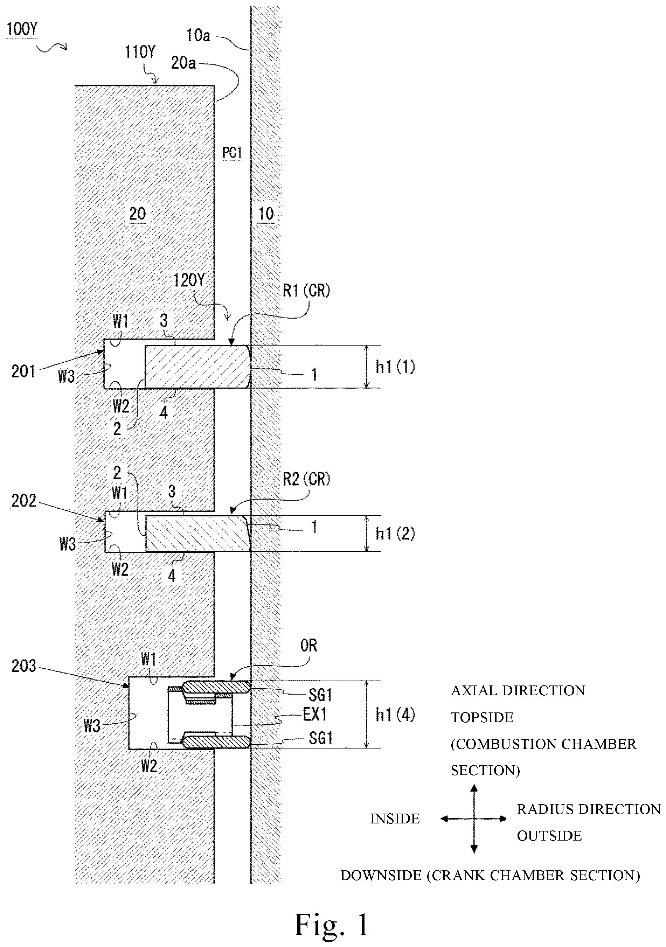

One embodiment of the present invention relates to a compression ring to be used in a spark-ignition engine using hydrogen gas fuel and to be fitted to a piston ring groove of a piston installed in a cylinder. Hereinafter, the configuration will be described with reference to FIG. 1. It is noted that the configuration described in embodiments below is not intended to limit the technical scope of the invention only thereto, unless particularly noted.
FIG. 1 is one example of a schematic view of a piston structure 110Y of a spark-ignition engine 100Y in which the compression ring according to the present embodiment is installed. In FIG. 1, the topside corresponds to a combustion chamber section and the downside corresponds to a crank chamber section. As illustrated in FIG. 1, the spark-ignition engine 100Y includes a cylinder 10, a piston 20 installed (inserted) in the cylinder 10, and a piston ring combination 120Y including two compression rings CR and one oil ring OR that are fitted to the piston 20.
Each piston ring groove is formed in the piston 20, and a first groove 201, a second groove 202, and a third groove 203 are formed sequentially closer to a combustion chamber section. A predetermined distance is ensured between a piston outer periphery 20a and an inner wall surface 10a of the cylinder 10, and thus a piston gap PC1 is formed. Such each ring groove serves as a groove circularly extending around an axis of the piston 20 and is formed on the entire periphery of the piston outer periphery 20a. Such each ring groove is formed with including a pair of groove walls (inner walls) vertically oppositely disposed. A topside groove wall and a downside groove wall in the pair of groove walls are respectively referred to as "upper wall W1" and "lower wall W2". A groove wall that connects an inner peripheral edge of the upper wall W1 and an inner peripheral edge of the lower wall W2 in such each ring groove is referred to as "bottom wall W3".

A top ring R1 as a compression ring to be fitted at a position closest to the combustion chamber is installed in the first groove 201, a second ring R2 as a compression ring to be fitted at a position next closest to the combustion chamber is installed in the second groove 202, and the oil ring OR to be fitted at a position farthest from the combustion chamber is installed in the third groove 203.

The second ring R2 is provided as a compression ring in the example illustrated in FIG. 1, and the second ring R2, although not necessarily present, is preferably present. A mode where three compression rings are provided may be adopted, or a mode where four compression rings are provided may be adopted.

The oil ring OR includes a pair of segments SG1 that slides on the inner wall surface 10a of the cylinder 10, and a spacer expander EX1 that biases them outside in a radius direction (toward the inner wall surface 10a). The oil ring OR illustrated in FIG. 1 is a so-called oil ring configured from three pieces, but not limited thereto, and may be an oil ring configured from two pieces, or a mode where no oil ring OR is provided may also be adopted.

The piston is not particularly limited as long as it is suitable for installation of the compression ring according to the present embodiment, and may have no second groove 202, or may have no third groove 203, or may further have a groove, depending on the piston ring combination.

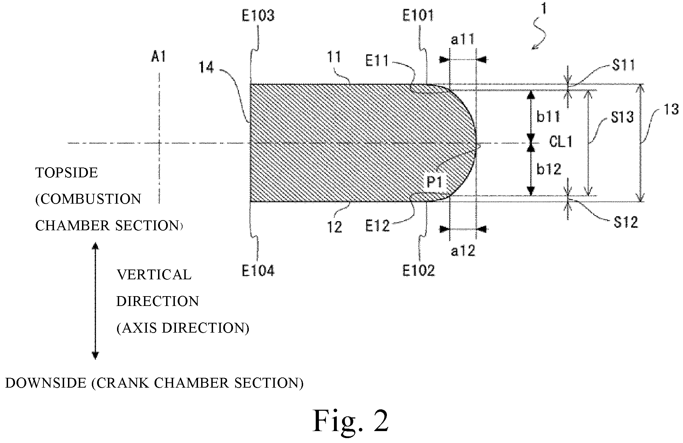

Next, the shape of the compression ring according to the present embodiment will be described with FIG. 2 as an example. FIG. 2 is a schematic view perpendicular to a perimeter direction of the compression ring according to the present embodiment. A compression ring illustrated in FIG. 2 includes an upper surface 11 provided topside, a lower surface 12 provided downside, an outer periphery 13 that connects an upper surface outer peripheral edge E101 and a lower surface outer peripheral edge E102, and an inner periphery 14 that connects an upper surface inner peripheral edge E103 and a lower surface inner peripheral edge E104. When the compression ring is in the state of being installed in a ring groove of the piston illustrated in FIG. 1, namely, in usage state, the upper surface 11 is located topside to face the upper wall W1 of the ring groove, the lower surface 12 is located downside to face the lower wall W2, and the outer periphery 13 slides on the inner wall surface 10a of the cylinder. The width in the axis direction, of the compression ring, is defined by the upper surface 11 and the lower surface 12.

The outer periphery 13 of the compression ring illustrated in FIG. 2 includes an outer peripheral sliding surface S13 provided on the outer peripheral end of the compression ring, an upper connection surface S11 that connects the outer peripheral sliding surface S13 and the upper surface 11, and a lower connection surface S12 that connects the outer peripheral sliding surface S13 and the lower surface 12. The upper connection surface S11 connects a peripheral border (upper connection point) E11 topside (combustion chamber section) of the outer peripheral sliding surface S13 and the upper surface outer peripheral edge E101. The lower connection surface S12 connects a peripheral border (lower connection point) E12 downside (crank chamber section) of the outer peripheral sliding surface S13 and the lower surface outer peripheral edge E102.

Symbol CL1 in FIG. 2 indicates a straight line that not only is perpendicular to a center axis A1 of the compression ring, but also passes through a top P1. The top P1 is a point at which the compression ring has the maximum diameter, and abuts with the inner wall surface 10a of the cylinder 10. a11 represents the head in the combustion chamber section in the compression ring, namely, the distance in the radius direction, between the top P1 and the upper connection point E11 of the outer peripheral sliding surface S13. a11 is equal to the distance from the inner wall surface 10a of the cylinder 10 to the upper connection point E11 of the outer peripheral sliding surface S13, in usage state. Similarly, a12 represents the head in the crank chamber section in the compression ring, namely, the distance in the radius direction, between the top P1 of the compression ring and the lower connection point E12 of the outer peripheral sliding surface S13. a12 is equal to the distance from the inner wall surface 10a of the cylinder 10 to the lower connection point E12 of the outer peripheral sliding surface S13, in usage state. Symbol b11 in FIG. 2 indicates the distance in the axis direction, between the top P1 of the outer peripheral sliding surface S13 and the upper connection point E11 of the outer peripheral sliding surface S13. b12 indicates the distance in the axis direction, between the top P1 of the outer peripheral sliding surface S13 and the lower connection point E12 of the outer peripheral sliding surface S13.

While the outer periphery is formed in a symmetric barrel shape in the example illustrated in FIG. 2, the outer peripheral shape of the compression ring according to the present embodiment is not particularly limited, and compression rings of various shapes can be each adopted. For example, the outer periphery may have a barrel shape, an eccentric barrel shape, or a taper shape, or the outermost peripheral sliding surface of the outer periphery may contain a flat portion. The lengths in the axis direction of the compression ring, of the upper connection surface S11 and the lower connection surface S12, may be different from each other. A shape not having one of, or both the upper connection surface S11 and the lower connection surface S12 may be adopted.

The cross section shape relative to the perimeter direction may be a rectangular shape, an internal bevel shape, a keystone shape, or a half-keystone shape, or may contain an undercut surface, but not limited thereto.

The hydrogen gas fuel herein refers to fuel including only hydrogen gas (except for impurities), or mixed fuel of hydrogen gas and other fuel. The proportion of hydrogen gas in the entire fuel may be 50% or more, 60% or more, or 70% or more.

The compression ring to be used in a spark-ignition engine using hydrogen gas fuel and to be fitted to a piston ring groove of a piston installed in a cylinder, according to the present embodiment, satisfies $T \leq 10$ in an abrasion resistance test performed with a reciprocating friction tester in a predetermined condition in order to evaluate an outer peripheral sliding surface of the compression ring, under the assumption that the amount of abrasion of the outer peripheral sliding surface in the test with dropping of 1 mL/hour of a bearing oil and 0.5 mL/hour of distilled water is TW1 ($\mu$m) and the amount of abrasion of the outer peripheral sliding surface in the test with dropping of only 1 mL/hour of the bearing oil is TO1 ($\mu$m) to thereby provide $T$ ($\mu$m) = TW1 - TO1.

TO1 represents the amount of abrasion of the compression ring in simulation of common usage environment (for example, in simulation of use of gasoline fuel) and TW1 represents the amount of abrasion of the compression ring in simulation of usage environment of high temperature and water excess (in use of hydrogen gas fuel), and T is the difference therebetween. In other words, when the value of T is small, specifically, $T \leq 10$ is satisfied, it is possible even under an environment of high temperature and water excess in a spark-ignition engine using hydrogen gas fuel to have shape maintenance function at a level comparable with that under common usage environment (for example, use of gasoline fuel), obtain sufficient abrasion resistance performance and keep seal performance. In order that T satisfies the above condition, such satisfaction can be realized by appropriately selecting the material of the compression ring and the surface treatment of the outer periphery thereof, and a coating film.

An abrasion resistance test is as follows.

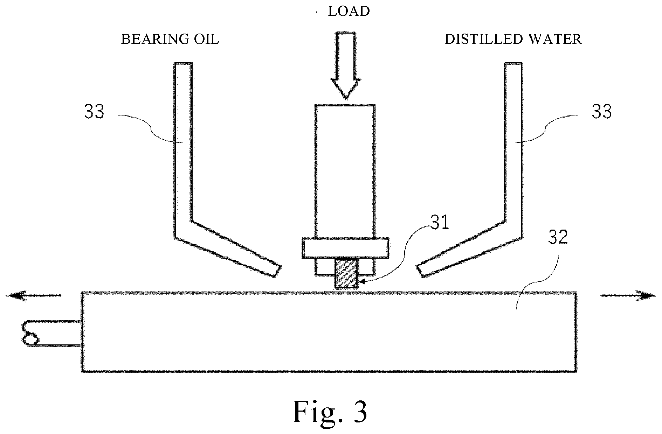

The test is performed with a reciprocating friction tester schematically illustrated in FIG. 3. A compression ring body is used as an upper test piece 31 in the abrasion resistance test.

A lower test piece 32 is a plate resembling a cylinder bore made of cast iron (material corresponding to FC250: HRB100, the maximum height of the surface roughness is Rz 1.0 to 1.5 $\mu$m (target: 1.2 $\mu$m) by polish finishing with #400 emery paper).

The abrasion resistance test is performed under the following test conditions, by dropping and feeding a bearing oil and distilled water to a sliding interface between the upper test piece 31 and the lower test piece 32, with an air dispenser 33.

<Test conditions>

- Stroke: 50 mm
- Load: 100 N
- Speed: 600 cycles/min
- Temperature control of upper test piece: room temperature
- Temperature control of lower test piece: room temperature
- Bearing oil: Shell Tetra Oil 2SP, Shell Lubricants Japan K.K.
- Dropping conditions of bearing oil: dropping once every one minute and controlling the total amount of dropping to 1 mL/hour
- Dropping conditions of distilled water: dropping once every one minute and controlling the total amount of dropping to 0.5 mL/hour
- Test time: 60 minutes

The test is performed after the trial run is performed under the following conditions.

- Load: 20 N
- Speed: 100 cycles/min
- Temperature of upper test piece before test: room temperature
- Temperature of lower test piece before test: room temperature
- Bearing oil: Shell Tetra Oil 2SP, Shell Lubricants Japan K.K.
- Dropping conditions of bearing oil: dropping once every one minute and controlling the total amount of dropping to 0.08 mL/5 min

- Test time: 5 minutes

The test is performed under the above conditions, the amount of abrasion of the coating film on the outer peripheral sliding surface of the compression ring in dropping of the bearing oil and distilled water is defined as TW1 ($\mu$m) and the amount of abrasion of the coating film on the outer peripheral sliding surface of the top ring in dropping of only the bearing oil is defined as TO ($\mu$m), to thereby provide T = TW1 - TO.

M ≤ 0.09 is preferably satisfied under the assumption that the tension of the compression ring is Ft and the length in the axis direction, of the outer peripheral sliding surface of the compression ring, is S 13, and that, in a case where the piston is disposed so that the outer periphery of the compression ring abuts with a cylinder bore, the inner diameter of the cylinder bore is D (mm), the distance in the radius direction, between an upper connection point of the compression ring and an inner wall of the cylinder bore, is a11 (mm), and the distance in the radius direction, between a lower connection point of the compression ring and the inner wall of the cylinder bore, is a12 (mm), to thereby provide Fd = Ft/D, head h = (a11 + a12)/2, outer periphery inclination OSt = h/(S13/2), and abrasion index M = T × Fd × OSt.

The values of S13, a11, and a12 are determined from the upper connection point E11 and the lower connection point E12 obtained by measurement of the outer periphery of the compression ring with a stylus type surface roughness measurement device. The stylus is a circular cone, and the taper angle of the circular cone is 60°. A tip R is 2$\mu$m.

The measurement magnifications are 5000x in a longitudinal axis (y axis: coincident with the radius direction of the compression ring) and 100x in a horizontal axis (x axis: coincident with the axis direction of the compression ring).

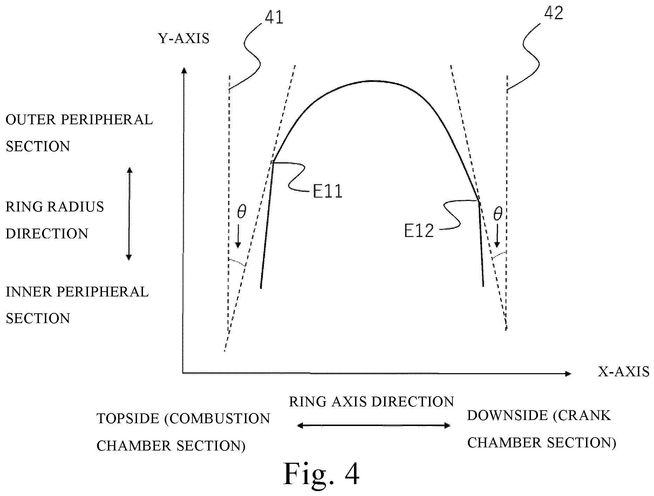

An outer periphery having a barrel shape is taken as an example, and the upper connection point E11 and the lower connection point E12 will be described with reference to FIG. 4.

An upper virtual line 41 and a lower virtual line 42 in parallel with the longitudinal axis (y axis) are drawn on a profile line of the outer periphery, resulting from measurement with a stylus type surface roughness measurement device, to determine a contact point between each straight line inclined right and left from the upper virtual line 41 and the lower virtual line 42 by θ (= 10°), and the profile line of the outer periphery. A contact point located topside (combustion chamber section) and a contact point downside (crank chamber section), of the compression ring, are respectively defined as the upper connection point E11 and the lower connection point E12.

Fd, OSt, and M are determined from the values obtained by the above measurements, and the tension Ft (N) and the inner diameter of the cylinder bore D (mm), according to the following expressions.

$$Fd = Ft/D$$

$$h = (a11 + a12)/2$$

$$OSt = h/(S13/2)$$

$$M = T \times Fd \times OSt$$

Fd represents the value of the tension of the compression ring, per inner diameter of the cylinder bore, and an increase in value of Fd tends to increase the surface pressure on the cylinder bore of the compression ring to thereby increase abrasion of the outer periphery. On the other hand, a decrease in value of Fd may lead to deterioration in seal performance with the cylinder bore.

The outer periphery inclination OSt corresponds to a relationship between the head of the compression ring and the length in the axis direction, of the outer peripheral sliding surface. When an outer periphery having a barrel shape is taken as an example, a larger OSt means a higher protruded barrel (high barrel) in the radius direction of the ring and a smaller OSt means a lower protruded barrel (low barrel) in the direction.

While a large value of OSt results in an enhancement in seal performance, the surface pressure of the compression ring on the cylinder bore, if high, causes not only increases in cylinder bore scuffing, sliding resistivity, and the like, but also an early decrease in head due to abrasion of the outer periphery, possibly resulting in rapid deterioration in seal performance. On the other hand, a low value of OSt possibly causes deterioration in seal performance and an increase in amount of oil consumption in the case of a low tension of the compression ring.

The abrasion index M is for consideration of the balance of them, and M ≤ 0.09 is satisfied to thereby enable the compression ring to keep seal performance in a spark-ignition engine using hydrogen gas fuel that leads to an environment of water excess.

If M is more than 0.09, the amount T of abrasion of the outer periphery is large or the values of Fd, OSt are large, and thus rapid deterioration in seal performance due to abrasion of the outer periphery is feared.

In order that M ≤ 0.09 is satisfied, the shape and the material of the compression ring, and the coating film of the outer periphery thereof may be appropriately selected depending on the values of T, Fd, and OSt.

The size of an abutment gap of the compression ring according to the present embodiment is not particularly limited, and is, as one example, in the range from 0.1 to 0.8 mm.

The width in the axis direction, of the compression ring according to the present embodiment, is not particularly limited, and is usually 0.8 mm or more, usually 4 mm or less. The outer diameter is usually, 50 mm or more and 220 mm or less.

A/T ≥ 100 is preferably satisfied under the assumption that the surface Vickers hardness of the outer peripheral sliding surface of the compression ring according to the present embodiment is A(HV0.1).

In order that A/T satisfies the above condition, the material of the compression ring, and the surface treatment and the coating film of the outer peripheral sliding surface may be appropriately selected.

The compression ring according to the present embodiment may have a coating film on the outer periphery, and the coating film is not particularly limited and preferably contains at least one selected from the group consisting of a PVD-treated coating film, a DLC coating film, a hard chrome-plated coating film and a nitriding-treated coating film.

PVD (physical vapor deposition) is one deposition method involving attaching a particle emitting from a target, onto a substrate, to thereby form a film on a substance surface, and can also be called physical vapor phase growth. A PVD method can encompass an ion plating method, a vacuum deposition method, an ion beam deposition method, a sputtering method, an FCVA (Filtered Cathodic Vacuum Arc) method, and the like.

In a case where the compression ring according to the present embodiment has a coating film on the outer periphery, the thickness of the coating film is not particularly limited, and is usually 0.001 mm or more, preferably 0.005 mm or more, and usually 0.2 mm or less, preferably 0.1 mm or less.

In a case where the coating film includes a DLC coating film, the DLC coating film may be a DLC coating film containing hydrogen, or may be so-called hydrogen-free DLC. For example, the proportion of a hydrogen element may be 5.0% by atom or less. A hydrogen-free DLC coating film is preferably used because of resulting in a reduction in friction coefficient during solid sliding.

A method for forming the hydrogen-free DLC coating film on the outer periphery of a piston ring, here used, can be any known method, and examples thereof include an ion plating method and a sputtering method.

The DLC coating film may contain any other element, and may contain, for example, Si, Ti, W, Cr, Mo, Nb, and/or V, but not limited thereto. In a case where such element(s) are/is contained, the total amount is preferably 40% by atom or less.

In a case where the coating film contains a CrN-based PVD-treated coating film or the DLC coating film, the thickness of the PVD-treated coating film or the DLC coating film is preferably 0.05 mm or less. The coating film thickness of the PVD-treated coating film or the DLC coating film is set in the above range, to thereby enable heat transfer between members to be hardly inhibited, resulting in an enhancement in cooling efficiency and suppression of abrasion.

In a case where the compression ring according to the present embodiment contains a coating film on the outer periphery, the coating film may be any one coating film of a PVD-treated coating film, a DLC coating film, a hard chrome-plated coating film, a nitriding-treated coating film, a ferrosoferric oxide coating film, a phosphate coating film, and the like, or may be a stacked coating film of any two or more thereof.

In a case where the compression ring according to the present embodiment contains a coating film on the outer periphery, the coating film is preferably contained on the outer peripheral sliding surface. The coating film may be contained on at least one of the upper surface and the lower surface or may cover only one portion of each of such surfaces, or different coating films may be on such respective surfaces.

The material of the substrate of the compression ring is not particularly limited. Examples of high-alloy steel include martensite-based stainless steel. Examples of low-alloy steel include valve spring steel and spring steel. Specifically, silicon chromium steel or the like is suitably used.

EXAMPLES

Hereinafter, the present invention will be described in detail with reference to Examples, but the present invention is not limited to only the following Examples.

Examples 1 to 19 and Comparative Examples 1 to 4

As shown in Table 1, compression rings according to Examples 1 to 19 and Comparative Examples 1 to 4 were produced with variations in coating film of the outer periphery, material and tension of the compression ring, and amount of a barrel on the outer periphery (protrusion shape height in radius direction). Even when the same type of the coating film was adopted, samples different in outer periphery hardness were produced with variations in treatment conditions such as temperature and time.

In Table 1, surface treatments A, B, C, D, E, and F of the outer periphery respectively represent DLC, PVD treatment, nitriding treatment, Cr plating, ferrosoferric oxide, and a phosphate coating film. Among them, E and F are mainly for rust prevention. Materials A, B and C respectively represent high-alloy steel, low-alloy steel, and cast iron.

The compression ring of each of Examples and Comparative Examples was subjected to measurement of the Vickers hardness, the abrasion resistance test, and measurement with a stylus type surface roughness measurement device. The results are shown in Table 1.

[Table 1]

Table 1

| | Surface treatment of outer periphery | Material | Outer periphery hardness A (Hv) | Fd (Nlmm) | Outer periphery inclination OSt | T(μm) | Abrasion index M | A/T |
|---|---|---|---|---|---|---|---|---|
| Example 1 | A | A | 1800 | 0.10 | 0.0222 | 0.01 | 0.0000 | 180000.0 |
| Example 2 | B | A | 1100 | 0.10 | 0.0559 | 0.05 | 0.0003 | 22000.0 |
| Example 3 | B | A | 1100 | 0.17 | 0.0037 | 0.05 | 0.0000 | 22000.0 |
| Example 4 | B | A | 950 | 0.10 | 0.0339 | 1.10 | 0.0037 | 8636 |
| Example 5 | B | A | 900 | 0.17 | 0.0339 | 1.70 | 0.0097 | 529.4 |
| Example 6 | B | A | 800 | 0.17 | 0.0339 | 2.30 | 0.0133 | 347.8 |
| Example 7 | C | A | 1200 | 0.11 | 0.0339 | 3.10 | 0.0118 | 387.1 |
| Example 8 | C | A | 1150 | 0.11 | 0.0508 | 3.60 | 0.0201 | 319.4 |
| Example 9 | C | A | 1150 | 0.17 | 0.0559 | 3.20 | 0.0300 | 359.4 |
| Example 10 | C | A | 950 | 0.17 | 0.0220 | 4.15 | 0.0152 | 2289 |
| Example 11 | C | A | 950 | 0.21 | 0.0508 | 4.00 | 0.0427 | 237.5 |
| Example 12 | C | A | 950 | 022 | 0.0559 | 4.25 | 0.0531 | 223.5 |
| Example 13 | D | B | 850 | 0.11 | 0.0373 | 5.10 | 0.0218 | 1667 |
| Example 14 | D | B | 850 | 0.18 | 0.0492 | 7.90 | 0.0703 | 1076 |
| Example 15 | D | B | 850 | 0.19 | 0.0559 | 7.80 | 0.0848 | 1090 |
| Example 16 | E | B | 460 | 0.10 | 0.0400 | 8.60 | 0.0348 | 535 |
| Example 17 | D | B | 750 | 0.21 | 0.0559 | 8.30 | 0.0985 | 904 |
| Example 18 | D | B | 750 | 0.25 | 0.0475 | 900 | 0.1049 | 83.3 |
| Example 19 | None | B | 420 | 0.21 | 0.0516 | 950 | 0.1040 | 442 |
| Comparative Example 1 | E | B | 390 | 0.10 | 0.0047 | 13.80 | 0.0065 | 28.3 |
| Comparative Example 2 | F | C | 280 | 0.10 | 0.0288 | 22.50 | 0.0634 | 124 |
| Comparative Example 3 | D | B | 600 | 0.18 | 0.0559 | 10.20 | 0.1014 | 58.8 |
| Comparative Example 4 | None | B | 390 | 0.21 | 0.0516 | 13.80 | 0.1510 | 28.3 |

From the foregoing, when the compression ring defined in the present invention is used in a spark-ignition engine using hydrogen gas fuel, abrasion resistance of the outer periphery of the compression ring can be kept at a level comparable with that in use of gasoline fuel and furthermore seal performance of the 10 outer periphery of the compression ring can be kept, even under an environment in the presence of condensed water generated due to combustion of hydrogen gas fuel.

REFERENCE SIGNS LIST

    1 compression ring
    100Y spark-ignition engine
    110Y piston structure
    120Y piston ring
    10 cylinder
    10a inner wall surface of cylinder 10
    20 piston
    20a outer periphery of piston 20
    PC1 piston gap
    R1 top ring
    R2 second ring
    OR oil ring
    SG1 segment
    EX1 spacer expander
    201 first groove
    202 second groove
    203 third groove
    h1 (1) width of top ring in axis direction
    h1 (2) width of second ring in axis direction
    h1 (4) width of oil ring in axis direction
    31 upper test piece
    32 lower test piece
    33 air dispenser

**Claims**

1.  A compression ring to be used in a spark-ignition engine using hydrogen gas fuel and to be fitted to a piston ring groove of a piston installed in a cylinder, wherein
    $T \leq 10$ is satisfied, when

    an abrasion resistance test is performed with a reciprocating friction tester in a predetermined condition in order to evaluate an outer peripheral sliding surface of the compression ring, $TW1$ ($\mu$m) is defined as an amount of abrasion of the outer peripheral sliding surface in the test with dropping of 1 mL/hour of a bearing oil and 0.5 mL/hour of distilled water,
    $TO1$ ($\mu$m) is defined as an amount of abrasion of the outer peripheral sliding surface in the test with dropping of only 1 mL/hour of the bearing oil, and
    $T$ ($\mu$m) = $TW1 - TO1$ is defined.

2.  The compression ring according to claim 1, wherein
    $M \leq 0.09$ is satisfied, when

    $Ft$ (N) is defined as a tension of the compression ring, $S13$ (mm) is defined as a length in an axis direction of the outer peripheral sliding surface of the compression ring, and
    in a case where the piston is disposed so that the outer periphery of the compression ring abuts with a cylinder bore, $D$ (mm) is defined as an inner diameter of the cylinder bore, $a11$ (mm) is defined as a distance in a radius direction between an upper connection point of the compression ring and an inner wall of the cylinder bore, $a12$ (mm) is defined as a distance in a radius direction between a lower connection point of the compression ring and the inner wall of the cylinder bore, and
    $Fd = Ft/D$,

head h = (a11 + a12)/2,
outer periphery inclination OSt = h/(S13/2), and
abrasion index M = T × Fd × Ost
are defined.

3. The compression ring according to claim 1 or 2, wherein
A/T ≥ 100 is satisfied, when
A(HV0.1) is defined as a surface Vickers hardness of the outer peripheral sliding surface.

Fig. 1

Fig. 2

LOAD

BEARING OIL

DISTILLED WATER

33

33

31

32

Fig. 3

Fig. 4

| INTERNATIONAL SEARCH REPORT | International application No. |
|---|---|
| | **PCT/JP2022/033776** |

**A. CLASSIFICATION OF SUBJECT MATTER**

*F02F 5/00*(2006.01)i; *F02B 43/10*(2006.01)i
FI: F02F5/00 Z; F02B43/10 B

According to International Patent Classification (IPC) or to both national classification and IPC

**B. FIELDS SEARCHED**

Minimum documentation searched (classification system followed by classification symbols)

F02F5/00; F02B43/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-59502 A (TOYOTA CENTRAL RES & DEV) 30 March 2015 (2015-03-30) paragraphs [0007]-[0017], [0020]-[0021], [0027]-[0034], [0043], [0085]-[0094], fig. 1-2, 7-9 | 1-3 |
| Y | | 1-3 |
| Y | JP 7-97906 A (MAZDA MOTOR CORP) 11 April 1995 (1995-04-11) paragraphs [0002], [0004] | 1-3 |
| A | Microfilm of the specification and drawings annexed to the request of Japanese Utility Model Application No. 57307/1975 (Laid-open No. 137004/1976) (KUBOTA TEKKO KABUSHIKI KAISHA) 05 November 1976 (1976-11-05), entire text, all drawings | 1-3 |

☐ Further documents are listed in the continuation of Box C. ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 November 2022** | **15 November 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2022/033776**

| Patent document cited in search report | | | Publication date (day/month/year) | Patent family member(s) | Publication date (day/month/year) |
|---|---|---|---|---|---|
| JP | 2015-59502 | A | 30 March 2015 | (Family: none) | |
| JP | 7-97906 | A | 11 April 1995 | (Family: none) | |
| JP | 51-137004 | U1 | 05 November 1976 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 51137004 U
- JP 51081203 A

- JP 2003013765 A